# EUROPEAN PATENT SPECIFICATION

(11) **EP 2 907 417 B1**
(45) Date of publication and mention of the grant of the patent: **07.12.2016**
(21) Application number: 15154409.5
(22) Date of filing: 10.02.2015
(51) Int. Cl.: A47F 3/04, F16B 21/00, A47F 5/10

(54) **Vertical refrigerated display cabinet**
Vertikale Kühlvitrine
Armoire de présentation réfrigérée verticale

(30) Priority: 14.02.2014 IT PD20140027
(43) Date of publication of application: 19.08.2015
(73) Proprietor: Epta S.p.A., 20138 Milano (IT)
(72) Inventor: Anin, Marc, 64100 Bayonne (FR); Lebrun, Jean-Marc, 64122 Urrugne (FR)
(74) Representative: Zanettin, Gianluigi

(56) References cited:
- EP-A2- 2 092 852
- US-A- 5 626 028

## Description

### FIELD OF APPLICATION

The present invention relates to a vertical refrigerated display cabinet of the modular type.

Advantageously, the refrigerated display cabinet of the present invention is of the type which can be disassembled.

In particular, the refrigerated display cabinet of the present invention may be of the open type, i.e. devoid of doors for closing the display compartment, or of the closed type, i.e. provided with doors for closing the display compartment.

### STATE OF THE ART

Generally, vertical refrigerated display cabinets are assembled directly at the factory and shipped to the customer already complete. This way, high quality standards are guaranteed especially in terms of robustness of the support structure of the cabinet. The transportation costs of said pre-assembled cabinets are however very high, due to their large size, and significantly affect the final price of the cabinet.

To limit transport costs many manufacturers have developed or are developing separable vertical refrigerated display cabinets. The cabinet is prepared in the factory divided into its three main parts (base, top cover and back). The transport of the cabinet, divided into these three parts is easier thanks to the reduction in size and volume. The cabinet is then assembled on site by installers.

A separable refrigerated cabinet is disclosed in EP2092852A.

Although this solution significantly reduces transport costs, the overall dimensions of the individual parts (base, top cover and back) continue to be significant, especially in the case of cabinets having a longitudinal extension of more than 2 metres. Moreover, given the size of the individual parts, assembly on site can be quite complex and expensive.

### PRESENTATION OF THE INVENTION

Consequently, the purpose of the present invention is to eliminate or at least attenuate the drawbacks of the prior art mentioned above, by providing a vertical refrigerated display cabinet which can be transported in a configuration of reduced volume compared to the assembled configuration and which is at the same easier to assemble on site than the conventional solutions.

A further purpose of the present invention is to make available a vertical refrigerated display cabinet which is economical and simple to make, but not more expensive than a traditional cabinet.

### BRIEF DESCRIPTION OF THE DRAWINGS

The technical characteristics of the invention according to the aforesaid purposes can be seen clearly from the contents of the following claims and the advantages thereof will be more clearly comprehensible from the detailed description below, made with reference to the appended drawings showing one or more embodiments by way of non-limiting examples, wherein:
- figure 1 shows a perspective side view of a chest of a modular unit of a vertical refrigerated display cabinet according to a preferred embodiment of the invention, the figure illustrating in particular the right end wall of the chest;
- figure 2 shows a view of a detail of figure 1, relating to an upright portion of a chest associated to a back portion of the cabinet;
- figures 3 and 4 show two perspective views from different angles of a detail of a modular unit according to the invention, which relates to a threaded seat for a setting foot;
- figure 5 shows a perspective view in cross-section of the threaded seat shown in figure 4 along the cross-section plane V-V indicated therein;
- figure 6 shows a schematic perspective view of the chests of three modular units of a cabinet according to the invention shown connected to each other and aligned;
- figure 7 is an orthogonal view in cross-section of the three chests in figure 6 according to the cross-section plane III-III indicated therein;
- figure 8 shows a perspective side view of a chest of a modular unit of a vertical refrigerated display cabinet according to a preferred embodiment of the invention, the figure illustrating in particular the left end wall;
- figure 9 shows a schematic view of four cabinets according to the invention, each composed of two or three modular units;
- figures 10 and 11 show two orthogonal views in cross-section of two interconnected hollow pins according to the cross-section planes XI-XI and X-X shown in the two figures;
- figure 12 shows an orthogonal view in cross-section of the two pins in figures 10 and 11 aligned, but not yet interconnected.
- figure 13 shows the same cross-section view as figure 10 in an alternative embodiment of the invention;
- figure 14 shows a perspective view of a hollow pin of a modular unit according to the invention;
- figure 15 is an orthogonal cross-section view of the two pins in figure 13 according to the cross-section plane III-III indicated therein.

### DETAILED DESCRIPTION

With reference to the appended drawings, reference numeral 1 globally denotes a vertical refrigerated display cabinet according to the invention.

Here and henceforth in the description and the claims, reference will be made to the cabinet 1 in conditions of use. The references to an upper or lower position or horizontal or vertical direction should therefore be understood in this sense.

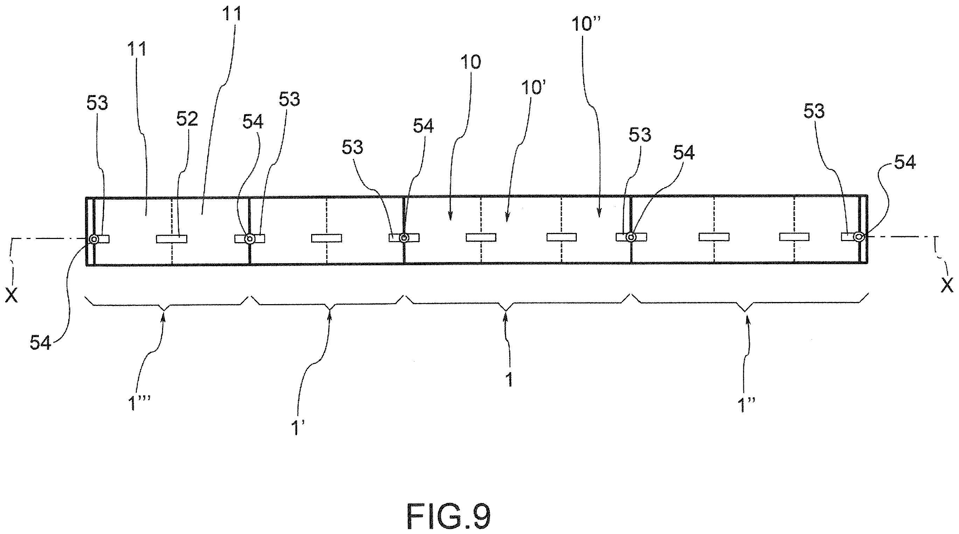

According to a general embodiment of the invention, the cabinet 1 is composed of two or more vertical modular units 10, 10', 10" connected to each other along an axis X of longitudinal extension of the cabinet, as shown schematically in figure 9.

Thanks to the division into modular units the cabinet can be configured for transport more flexibly. Furthermore, the individual modules have smaller dimensions (a fraction of the final cabinet). For example, a single modular unit may have a length of 1.25m, compared to the size of the traditional counters of 2.5m or 3.75m. This facilitates the installers in the assembly phase.

Each modular unit 10 comprises a chest 11 which acts as base for the modular unit and has means 20 for interconnection with the chests 11 of two other adjacent modular units 10; 10".

Advantageously, each modular unit 10 can be transported subdivided into its main components, i.e. in particular the chest, top cover and back.

Alternative solutions may however be provided for in which only the chest is divided in multiple modular units, while the top cover (generally lighter and therefore easier to handle) can be made in a single piece and is therefore shared between the modular units comprising the single cabinet.

The aforesaid interconnecting means 20 of the chest 11 are positioned both at the right end wall 12 and at the left end wall 13 of the cabinet. Said two end walls are opposite one another along the longitudinal extension axis X.

Advantageously, in the end modular units of the cabinet according to the invention, the interconnecting means 20 positioned in the free end walls can be used to connect to such free walls (and thus bare) covering panels (for example, having an aesthetic function) provided with corresponding interconnecting means.

For each end wall 12, 13 the aforesaid interconnecting means comprise at least one hollow pin 21 which extends from the corresponding end wall outwards and is composed of a first longitudinal tongue 21a and of a second longitudinal tongue 21b.

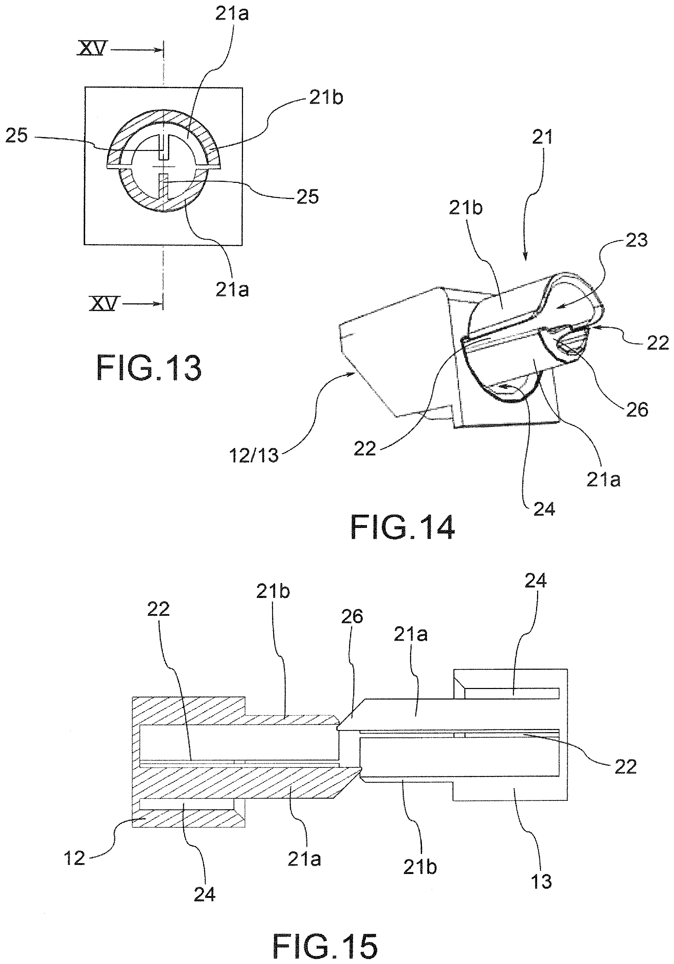

As shown in particular in figure 14, the two tongues 21a and 21b are divided from each other by through splits 22 and delimit the inner hollow space 23 of the hollow pin 21.

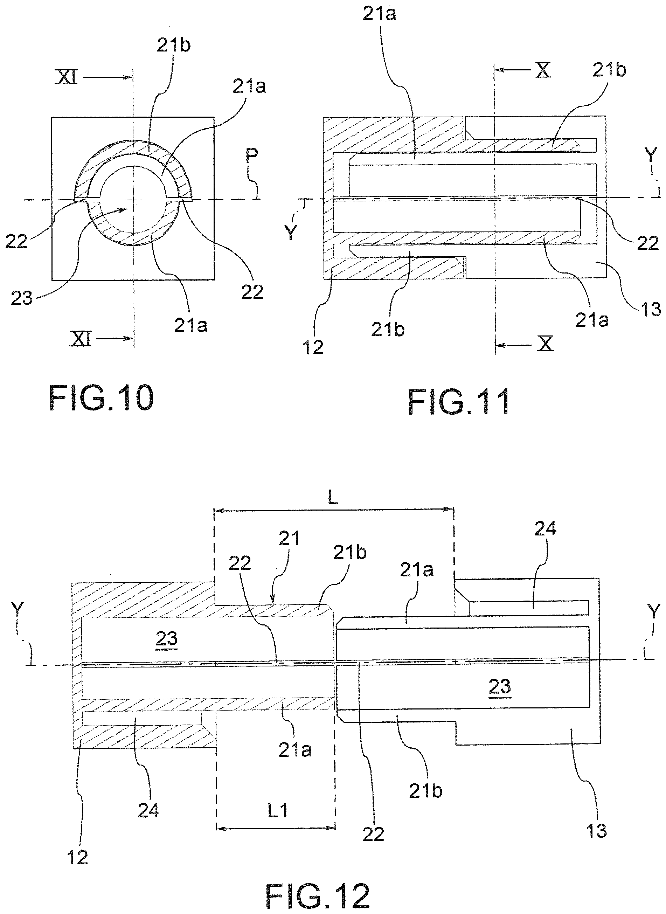

As shown in particular in figures 10 and 13, the first tongue 21a has a smaller transversal cross-section than the second tongue 21b. In other words the first tongue 21a has dimensions such as to be able to fit into the portion of the inner space 23 delimited by the second tongue 21b.

As will be evident from the rest of the description, the division of the pin into two tongues separate from each other and the different size of the two pins is functional to the interconnection between two hollow pins 21.

As may be seen in figure 14, the aforesaid interconnecting means comprise a cavity 24 which is made on the end wall 12, 13 next to and on the outside of each hollow pin 21 and which extends around the first tongue 21a.

Operatively, the hollow pin 21 of the right end wall of a modular unit is destined to engage the hollow pin of the left end wall of an adjacent modular unit and vice versa in order to align and connect the two modular units during the assembly operations of the cabinet.

With reference to a common alignment axis Y and to a reference plane p passing through the splits 22, the hollow pin 21 and the relative cavity 24, made on the left end wall 13 of a chest, are oriented turned upside down and offset to the hollow pin 21 and the relative cavity 24 made on the right end wall 12. This way the first tongue 21a of one pin can enter the hollow space 23 of another pin and the second tongue 21b of one pin can enter the cavity 24 made next to and on the outside of the other pin, allowing the mutual interconnection between two opposite hollow pins.

Advantageously, the hollow pins 21 of the interconnecting means - thanks to their conformation-significantly facilitate the alignment operations of two modular units 10 and 10'.

More in detail, the interconnecting means according to the present invention differ significantly from the traditional ones. The traditional systems provide for a female element on one side and a male element on the other. Diversely, according to the invention at least one male element is provided (the two tongues of the hollow pin) and at least one female element (the inner space 23 of the pin and the outer cavity 24) on both sides, i.e. on both end walls of the module to be connected.

This entails at least three advantages.
A first advantage is related to the fact that in the alignment phase, the two modular units to be aligned and connected come into mutual contact and begin to reciprocally guide each other already at a distance equal to the sum of the longitudinal extensions of the two opposite pins. Making a comparison with a traditional single male -female configuration, for the same extension in length L1 between the single male element and the hollow pin according to the invention, the configuration according to the invention makes it possible to start the alignment operations already at double the distance. This simplifies and speeds up the work of the installers.
A second advantage is related to the fact that, for the same distance of approach/starting of alignment L, the configuration according to the invention makes it possible to have male elements having half the length. In other words the "approach distance L" is divided over two male elements (the two hollow pins) instead of being provided by a single male element. This reduces the risk of damage to the projecting male element (i.e. the hollow pin).
A third advantage is related to the fact that the interconnection between the two hollow pins ensures a more stable and safe connection.

The cabinet according to the invention can thus be transported in a configuration of reduced volume compared to the assembled configuration (thanks to the subdivision into modular units) and is at the same easier to assemble on site compared to the traditional solutions (thanks to the interconnecting means described above and to the smaller size of the individual modular units).

Advantageously, as shown in figures 14 and 15, at least the first tongue 21a of each pin 21 may have a chamfered free end 26 destined to engage the second tongue of an opposite pin 21b. Said chamfered free end is shaped so as to facilitate and guide the alignment and the interconnection between the two pins.

Advantageously, as shown in figure 13, the first tongue 21a of each pin 21, which is destined to enter the inner hollow space 23 of another pin, is provided internally with one or more reinforcing ribs 25. The presence of said ribs reduces the risk of damage to the tongue during the alignment and interconnection operations.

Advantageously, as shown in particular in figure 11, the cavity 24, which is made on the end wall next to and on the outside of each hollow pin 21 and extends around the first tongue 21a, has an extension parallel to the alignment axis Y not smaller (and preferably greater) than the extension of the second tongue (21b) outside the end wall. This ensures a complete insertion of the second tongue in the cavity 21b.

Advantageously, as shown in particular in figure 11, the hollow internal space 23 of each pin has an extension parallel to the alignment axis Y not smaller (and preferably greater) than the extension 21a of the first tongue. This ensures a complete insertion of the first tongue 21a in the inner hollow space 23.

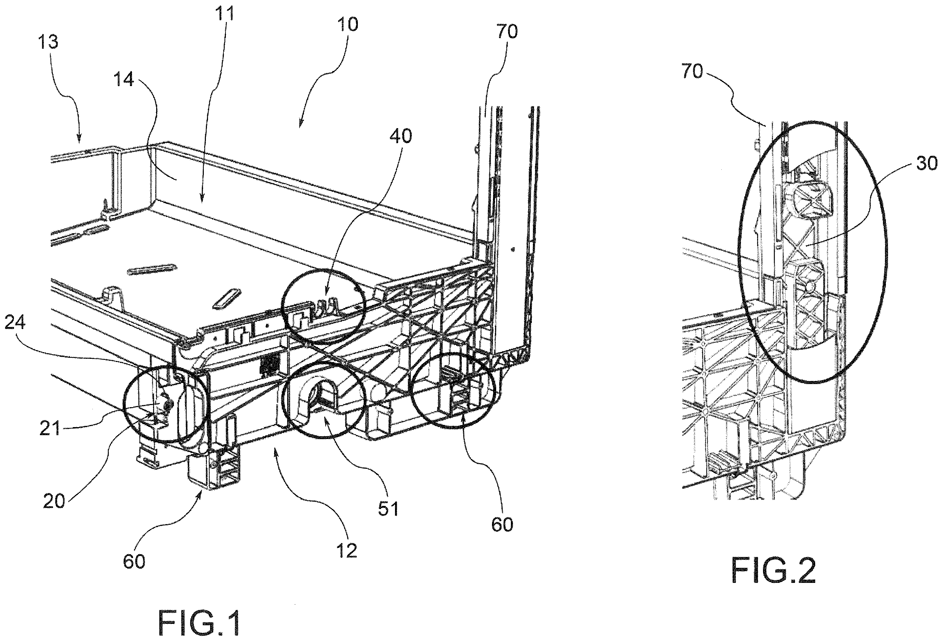

Advantageously, as shown in figures 1 and 2, each end wall 12, 13 of the chest 11 is provided with an upright portion 30 which extends from the top of the chest 11 upwards near the back of the cabinet. This upright portion 30 has the function of interconnecting the chest 11 with a back portion 70 of the modular unit.

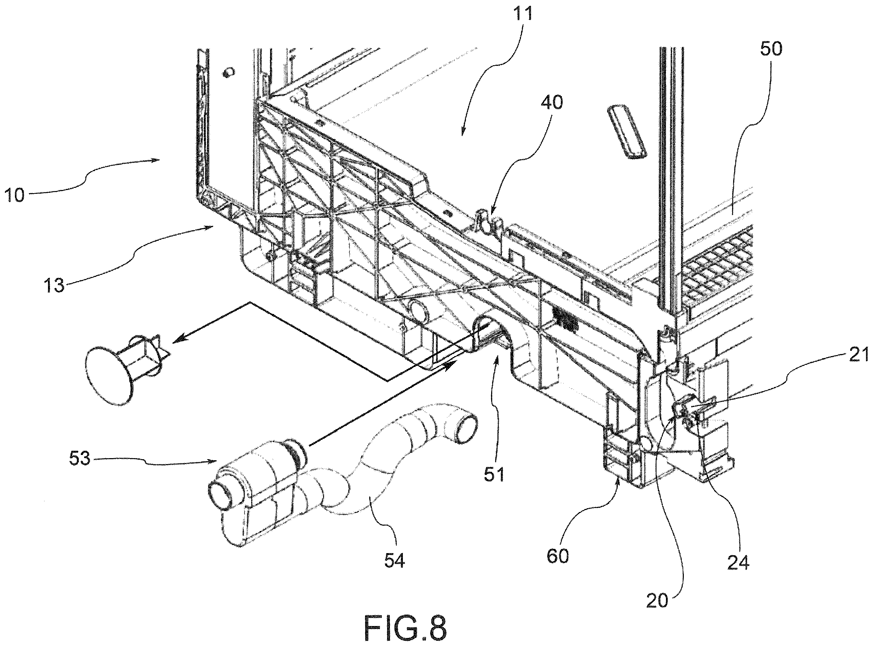

Advantageously, as shown in particular in figures 1 and 8, each end wall 12, 13 of the chest 11 is provided with one or more open slots 40 which are made on the upper edge of the end wall and act as seats for lodging connectors of electrical cables to be placed across two adjacent modular units. Said slots 40 are positioned so as to be aligned with corresponding slots of an adjacent modular unit when the two modular units are aligned. This greatly simplifies the installation of electrical cables in that special housing seats are already provided.

In general, the chest of a vertical refrigerated display cabinet is provided with a drain channel for possible liquid collecting therein. The division of the chest of the single cabinet into a multiplicity of small chests could complicate the hydraulic drainage connections of the various drain channels of the individual chests, increasing the number thereof.

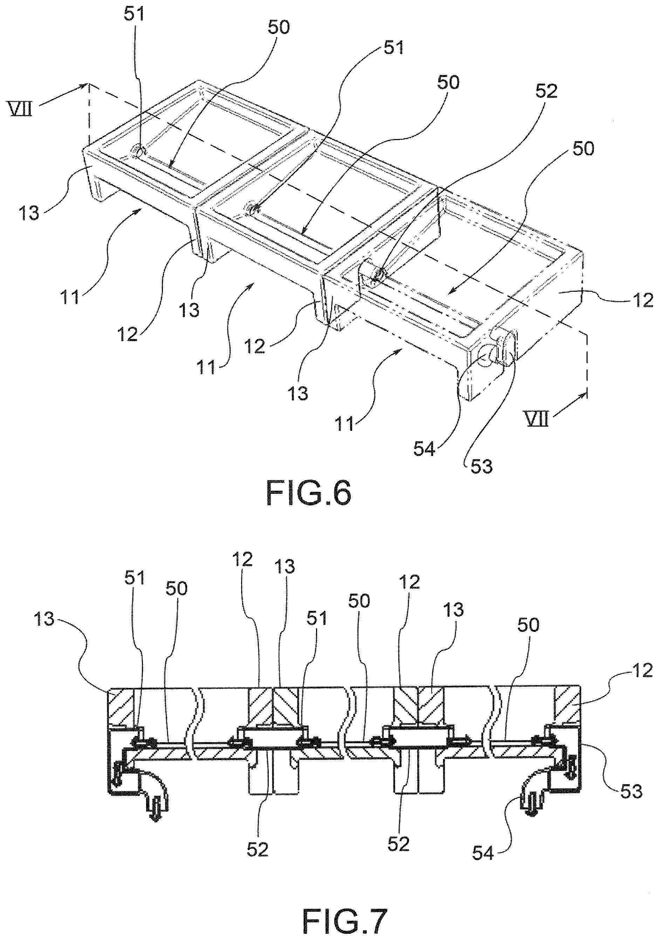

Advantageously, according to a particular embodiment of the invention illustrated in particular (even though schematically) in figures 6 and 7, each chest 11 has its own drain channel 50 which extends between two opposite end walls 12, 13 of said chest. Both the two opposite end walls 12, 13 are provided with a through opening 51 which is made on the end wall at the drain channel (see also figures 1 and 8). The drain channels 50 of two adjacent modular units 10 and 10' of the same cabinet 1 are fluidically connected to each other by a pipe connection 52 inserted inside the through apertures 51 when the two adjacent modular units are aligned and connected to each other. This way a single drain channel is created overcoming the drawbacks hypothesised above.

Advantageously, as shown in particular in figures 6 and 7, the cabinet 1 comprises at least one end pipe connection 53 which connects the drain channel 50 of an end modular unit of a cabinet via a through aperture 51 to an external drain conduit 54.

Advantageously, the aforesaid end pipe connection 53 has a T shape and is positioned between two adjacent cabinets 1 and 1' in order to fluidically connect the drain channels 50 of the two adjacent cabinets 1 and 1' to the same external drain conduit 54, so as to simplify the hydraulic connections.

Advantageously, the chest 11 of each modular unit 10 may be provided with one or more setting feet 60, positioned under the chest at each end wall 12, 13.

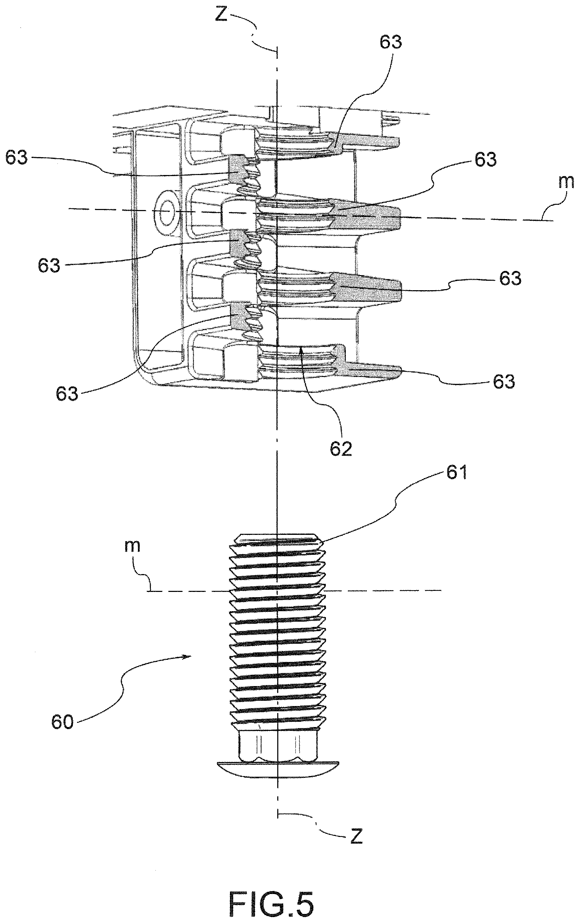

In particular, as shown for example in figure 5, each setting foot 60 has a threaded connection portion 61 by means of which the pin 60 is engaged in an adjustable manner inside a threaded seat 62 made in the end wall.

Preferably, each threaded seat 61 is accessible from the top of the chest in order to adjust the adjustable foot from above 60, and thus be able to make adjustments, possibly even when the cabinet is assembled.

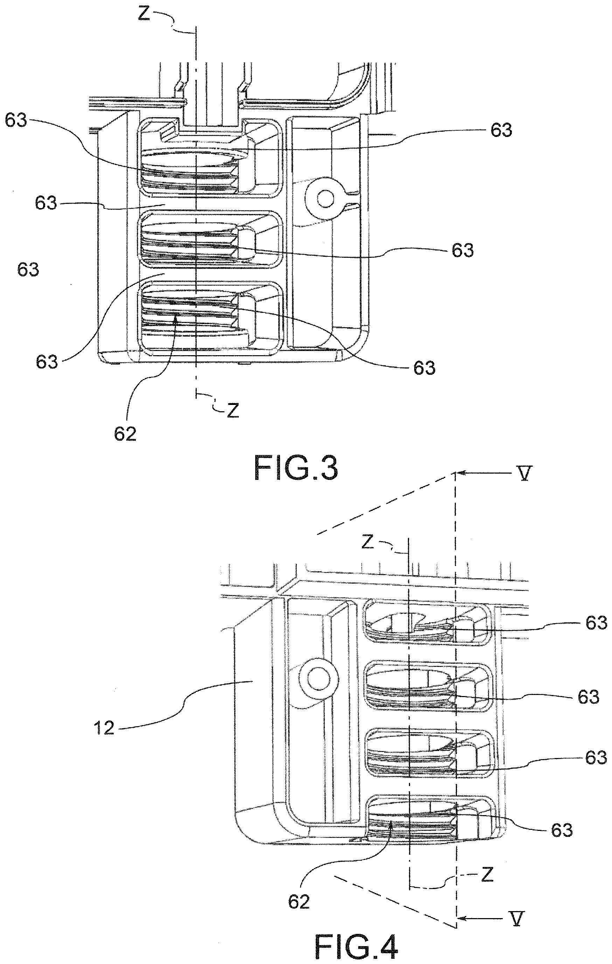

Preferably, as shown in figures 3 to 5, the threaded seat 62 is defined by half-ring threading portions 63, which are positioned alternated with one another on two opposite sides of the threaded seat 62 with respect to the adjustment axis Z of the foot 60. This particular configuration of the threaded seat is advantageous since it avoids the formation of undercuts and therefore makes the portion or portions of the end wall 12, 13 incorporating the aforesaid threaded seat easier to mould. In particular, the mould to be used may be composed of just two half-shells which penetrate each other to form the aforesaid semi-annular threaded portions. After moulding, the two half-shells can be opened with a simple translation movement. Diversely from the provisions according to the invention, if the threaded seat were to be made as a single continuous cylindrical seat, the moulding would require the use of a much more complex mould: two lateral half shells and a thread core (to define the inner cavity of the seat). After moulding such inner core would need to be extracted from the moulded piece with a rotation movement.

Advantageously, as shown in figure 5, the threaded connecting portion 61 of the foot and the threaded seat 62 have corresponding threads which have an asymmetrical profile with respect to planes m orthogonal to the adjustment axis Z of the foot 60. The asymmetric profile is chosen so that the thread opposes the forces loaded on the foot.

According to the preferred embodiment illustrated in the appended drawings, each end wall 12, 13 of the chest is made as a separate element from the main body of the chest 11.

More in detail, the main body of the chest may be made substantially as a normal chest of a traditional cabinet (except for the size), provided with a bottom and perimetral containment walls which extend from the chest. The end wall 12 and 13 is made separately as a sort of panel to be applied to the main body of the chest in the correct positions. Said panel per se can therefore be made more easily by moulding in plastic, providing appropriate reinforcing ribs or lattice structures.

Preferably said panel can incorporate all the technical expedients described above: interconnecting means; upright connection portion with the back portion; slots for housing the connectors of the electric cables; connection openings of the drain channels; setting feet. Said panel may also provide for the incorporation of just some of the above expedients.

The invention permits numerous advantages to be obtained, some of which already pointed out above.

The vertical refrigerated display cabinet can be transported in a configuration having a reduced volume compared to the assembled configuration and is easier to assemble on site compared to the traditional solutions.

In this sense, all the expedients described, from the interconnecting means to the upright connection portion with the back portion, the slots for the connectors, the connection openings of the drain channels, the setting feet are functional to making the assembly of the cabinet starting from modular units simpler and easier.

The vertical refrigerated display cabinet according to the invention is also economical and simple to make, thanks to the expedients which permit its production using moulding techniques of plastic materials. Given the many advantages, the cabinet according to the invention is certainly not more expensive than a traditional cabinet.

The invention thus conceived thereby achieves the intended objectives.

Obviously, its practical embodiments may assume forms and configurations different from those described while remaining within the sphere of protection of the invention.

Furthermore, all the parts may be replaced with technically equivalent parts and the dimensions, shapes and materials used may be varied as required.

## Claims

1. Vertical refrigerated display cabinet composed of two or more vertical modular units (10, 10', 10") connectable to each other along an axis (X) of longitudinal extension of the cabinet, each modular unit (10) comprising a chest (11) which acts as base for the modular unit and has means (20) for interconnection with the chests (11) of other two adjacent modular units (10; 10"), said interconnecting means (20) being positioned both at the right end wall (12) and at the left end wall (13) of the cabinet, said two end walls being opposed to each other with respect to the longitudinal extension axis (X) of the chest, for each end wall (12, 13) said interconnecting means comprising at least one hollow pin (21) which protrudes from the corresponding end wall and is composed of a first (21a) and second (21b) longitudinal tongues which are divided one to each other by two through opposed splits (22, 22) and delimit the inner hollow space (23) of the hollow pin, the first tongue (21a) having a transversal section smaller than that of the second tongue (21b), said interconnecting means comprising a cavity (24) which is made on the end wall next to and out of each hollow pin (21) and extends around the first tongue (21a) of the hollow pin, the hollow pin of the right end wall of a modular unit being destined to engage the hollow pin of the left end wall of an adjacent modular unit and vice versa in order to align and connect the two modular units during the mounting operations of the cabinet, with reference to a common alignment axis (Y) and to a reference plane (p) passing through the splits (22) the hollow pin (21) and the relative cavity (24) made on the left end wall (13) of a chest being oriented turned upside down and being offset with respect to the hollow pin (21) and the relative cavity (24) made on the right end wall (12), so that the first tongue (21a) of one pin can enter the hollow space (23) of another pin and the second tongue (21b) of one pin can enter the cavity (24) made next to and out of the other pin, allowing the mutual interconnection between two opposed hollow pins.

2. Cabinet according to claim 1, wherein at least the first tongue (21a) of each pin (21) has a chamfered free end (26) destined to engage the second tongue (21b) of an opposed pin, the chamfered free end being shaped so as to facilitate and guide the alignment and the interconnection between the two pins.

3. Cabinet according to claim 1 or 2, wherein the first tongue (21a) of each pin (21), which is destined to enter the inner hollow space (23) of another pin, is provided internally of one or more reinforcing ribs (25).

4. Cabinet according to one or more of claims 1 to 3, wherein the cavity (24), which is on the end wall next to and out of each hollow pin (21) and extends around the first tongue (21a), has an extension parallel to the alignment axis (Y) not smaller than the extension of the second tongue (21b) out of the end wall.

5. Cabinet according to one or more of claims 1 to 4, wherein the inner hollow space (23) of each pin has an extension parallel to the alignment axis (Y) not smaller than the extension of the first tongue (21b).

6. Cabinet according to one or more of the previous claims, wherein each end wall (12, 13) of the chest (11) is provided with an upright portion (30) protruding from the top of the chest (11) upwards in proximity of the back of the cabinet, said upright portion (30) interconnecting the chest (11) with a back portion (70) of the modular unit.

7. Cabinet according to one or more of the previous claims, wherein each end wall (12, 13) of the chest (11) is provided with one or more open slots (40) which are made on the upper edge of the end wall and act as seats for lodging connectors of electrical cables to be placed across two adjacent modular units, the slots being positioned so that to be aligned with corresponding slots of an adjacent modular unit when the two modular units are aligned.

8. Cabinet according to one or more of the previous claims, wherein each chest has a drain channel (50) which extends between the two opposite one end wall (12, 13) of the chest, both opposite end walls (12, 13) being provided with a through aperture (51) which is made on the end wall in correspondence of the drain channel, the drain channels (50) of two adjacent modular units (10) being fluidically connected one with each other by a pipe connection (52) inserted into the through apertures (51) when the two adjacent modular units are aligned and connected one to each other.

9. Cabinet according to claim 8, wherein the cabinet comprises at least one end pipe connection (53) which connects the drain channel (50) of an end modular unit of a cabinet at a through aperture (51) to an external drain conduit (54).

10. Cabinet according to claim 9, wherein said end pipe connection (53) has a T shape and is positioned between two adjacent cabinets (1) in order to fluidically connect the drain channels (50) of the two adjacent cabinets to the same external drain conduit (54).

11. Cabinet according to one or more of the previous claims, wherein the chest (11) of each modular unit (10) is provided with one or more adjustable setting feet (60) which are positioned under the chest at each end wall (12, 13), each setting foot (60) having a thread connecting portion (61) by which the foot (60) is adjustably engaged into a thread seat (62) made inside the end wall.

12. Cabinet according to claim 11, wherein the thread seat (62) is defined by thread half-ring portions (63), which are positioned alternated one with each other on two opposite sides of the thread seat (62) with respect to the adjusting axis (Z) of the foot (60).

13. Cabinet according to claim 11 or 12, wherein the thread connecting portion (61) of the foot and the thread seat (62) have corresponding threads which have an asymmetrical profile with respect to planes (m) orthogonal to the adjusting axis (Z) of the foot (60).

14. Cabinet according to one or more of the claims 11 to 13, wherein each thread seat (61) is accessible from the top of the chest in order to regulate the adjustable foot (60) from the top.

15. Cabinet according to one or more of the previous claims, wherein each end wall (12, 13) of the chest of a modular unit is made as a separate element from the main body of the chest (11).

## Patentansprüche

1. Vertikale Kühlvitrine, zusammengesetzt aus zwei oder mehreren vertikalen Mod-uleinheiten (10, 10', 10"), miteinander verbindbar entlang einer Achse (X) in Längsausdehnung der Vitrine, wobei jede Moduleinheit (10) eine Truhe (11) umfasst, die als Basis für die Moduleinheit fungiert und Mittel (20) zur Verbindung mit den Truhen (11) zweier weiterer angrenzender Moduleinheiten (10; 10") aufweist, wobei die Verbindungsmittel (20) sowohl an der rechten Endwand (12) als auch an der linken Endwand (13) der Vitrine positioniert sind, wobei die beiden Endwände sich gegenüberliegen in Bezug auf die Längsausdehnungsachse (X) der Vitrine, wobei für jede Endwand (12, 13) die Verbindungsmittel mindestens einen Hohlbolzen (21) umfassen, der von der entsprechenden Endwand hervorsteht und aus einer ersten (21a) und einer zweiten (21b) Längszunge zusammengesetzt ist, die voneinander getrennt sind durch zwei entgegegengesetzte durchgängige Aufspaltungen (22, 22) und den inneren Hohlraum (23) des Hohlbolzens abgrenzen, wobei die erste Zunge (21a) einen kleineren Querschnitt als der der zweiten Zunge (21b) aufweist, wobei die Verbindungsmittel einen Hohlraum (24) aufweisen, der an der Endwand neben und außerhalb jedes Hohlbolzens (21) hergestellt ist und sich um die erste Zunge (21a) des Hohlbolzens herum erstreckt, wobei der Hohlbolzen der rechten Endwand einer Moduleinheit dafür bestimmt ist, in den Hohlbolzen der linken Endwand einer angrenzenden Moduleinheit einzugreifen und umgekehrt, um die beiden Moduleinheiten auszurichten und zu verbinden während des Montage-vorgangs der Vitrine, in Bezug auf eine gemeinsame Ausrichtungsachse (Y) und eine Referenzebene (p), die durch die Aufspaltungen (22) des Hohlbolzens (21) und den relativen Hohlraum (24) in der linken Endwand (13) einer Truhe laufen, die kopfüber orientiert ist und versetzt ist in Bezug auf den Hohlbolzen (21) und den relativen Hohlraum (24) in der rechten Endwand (12), so dass die erste Zunge (21a) eines Bolzens in den hohlen Raum (23) eines anderen Bolzens eindringen kann und die zweite Zunge (21b) eines Bolzens in den Hohlraum (24) neben dem und außerhalb des anderen Bolzens eindringen kann, was die gegenseitige Verbindung zweier entgegengesetzter Hohlbolzen miteinander ermöglicht.

2. Vitrine nach Anspruch 1, wobei mindestens die erste Zunge (21a) jedes Bolzens (21) ein abgeschrägtes freies Ende (26) aufweist, das dafür bestimmt ist, in die zweite Zunge (21b) eines entgegengesetzten Bolzens einzugreifen, wobei das abgeschrägte freie Ende so geformt ist, dass es die Ausrichtung und Verbindung zwischen beiden Bolzen ermöglicht und führt.

3. Vitrine nach Anspruch 1 oder 2, wobei die erste Zunge (21a) jedes Bolzens (21), die dafür bestimmt ist, in den inneren hohlen Raum (23) eines anderen Bolzens einzudringen, innerhalb einer oder mehrerer Verstärkungsrippen (25) bereitgestellt ist.

4. Vitrine nach einem der Ansprüche 1 bis 3, wobei der Hohlraum (24), der sich in der Endwand neben und außerhalb jedes Hohlbolzens (21) befindet und sich um die erste Zunge herum (21a) erstreckt, eine Erweiterung aufweist parallel zur Ausrichtungsachse (Y) nicht kleiner als die Erweiterung der zweiten Zunge (21b) aus der Endwand.

5. Vitrine nach einem der Ansprüche 1 bis 4, wobei der innere hohle Raum (23) jedes Bolzens eine Erweiterung aufweist parallel zur Ausrichtungsachse (Y) nicht kleiner als die Erweiterung der ersten Zunge (21b).

6. Vitrine nach einem oder mehreren der vorangehenden Ansprüche, wobei jede Endwand (12, 13) der Truhe (11) mit einem senkrechten Abschnitt (30) versehen ist, der von der Oberseite der Truhe (11) nach oben hervorsteht nahe der Rückseite der Vitrine, wobei der senkrechte Abschnitt (30) die Truhe (11) mit einem rückseitigen Abschnitt (70) der Moduleinheit verbindet.

7. Vitrine nach einem oder mehreren der vorangehenden Ansprüche, wobei jede Endwand (12, 13) der Truhe (11) mit einem oder mehreren offenen Schlitzen (40) versehen ist, die auf der oberen Kante der Endwand ausgebildet sind und als Auf-nahmeflächen zur Aufnahme für die Befestigung von Verbindern oder elektrischen Kabeln fungieren, um über zwei angrenzende Moduleinheiten platziert zu werden, wobei die Schlitze positioniert sind, um mit entsprechenden Schlitzen einer an-grenzenden Moduleinheit ausgerichtet zu werden, wenn die beiden Moduleinheit-en ausgerichtet werden.

8. Vitrine nach einem oder mehreren der vorangehenden Ansprüche, wobei jede Truhe eine Ablaufrinne (50) aufweist, die sich zwischen den entgegengesetzten Endwänden (12, 13) der Truhe erstrecken, wobei beide entgegengesetzte End-wände (12, 13) mit einer Durchgangs-Öffnung (51) versehen sind, die in der End-wand in Übereinstimmung mit der Ablaufrinne hergestellt ist, wobei die Ablaufrin-nen (50) zweier angrenzender Moduleinheiten (10) durch eine in die DurchgangsÖffnungen (51) eingesetzte Rohrverbindung (52) fluidtechnisch miteinander verbunden sind, wenn die beiden angrenzenden Moduleinheiten ausgerichtet und miteinander verbunden sind.

9. Vitrine nach Anspruch 8, wobei die Vitrine mindestens eine End-Rohrverbindung (53) umfasst, die die Ablaufrinne (50) einer End-Moduleinheit einer Vitrine an einer Durchgangs-Öffnung (51) mit einem externen Ablaufrohr (54) verbindet.

10. Vitrine nach Anspruch 9, wobei die End-Rohrverbindung (53) eine T-Form hat und zwischen zwei angrenzenden Vitrinen (1) positioniert ist, um die Ablaufrinnen (50) der beiden angrenzenden Vitrinen mit demselben externen Ablaufrohr (54) flu-idtechnisch zu verbinden.

11. Vitrine nach einem oder mehreren der vorangehenden Ansprüche, wobei die Truhe (11) jeder Moduleinheit (10) mit einem oder mehreren verstellbaren Ein-stellfüßen (60) versehen ist, die unter der Truhe an jeder Endwand (12, 13) posi-tioniert sind, wobei jeder Einstellfuß (60) einen Gewindeanschluss-Abschnitt (61) aufweist, durch den der Fuß (60) in einen Gewindesitz (62) innerhalb der Endwand verstellbar eingreift.

12. Vitrine nach Anspruch 11, wobei der Gewindesitz (62) durch Gewinde-Halbring-Abschnitte (63) definiert ist, die einander abwechselnd auf zwei entgegengesetzten Seiten des Gewindesitzes (62) positioniert sind in Bezug auf die Ausrichtungsachse (Z) des Fußes (60).

13. Vitrine nach Anspruch 11 oder 12, wobei der Gewindeanschluss-Abschnitt (61) des Fußes und der Gewindesitz (62) entsprechende Gewinde aufweisen, die ein asymmetrisches Profil in Bezug auf zur Ausrichtungsachse (Z) des Fußes (60) or-thogonale Ebenen (m) aufweisen.

14. Vitrine nach einem oder mehreren der Ansprüche 11 bis 13, wobei jeder Gewindesitz (61) von der Oberseite der Truhe zugänglich ist, um den verstellbaren Fuß (60) von oben einzustellen.

15. Vitrine nach einem oder mehreren der vorangehenden Ansprüche, wobei jede Endwand (12, 13) der Truhe einer Modulareinheit als separates Bauteil von dem Hauptkörper der Truhe (11) ausgebildet ist.

## Revendications

1. Armoire de présentation réfrigérée verticale composée de deux unités modulaires verticales ou plus (10, 10', 10") pouvant être raccordées les unes aux autres selon un axe (X) de direction longitudinale de l'armoire, chaque unité modulaire (10) comprenant un coffre (11) qui sert de base à l'unité modulaire et possède un moyen (20) d'interconnexion avec les coffres (11) de deux autres unités modulaires adjacentes (10 ; 10"), ledit moyen d'interconnexion (20) étant positionné à la fois à la paroi d'extrémité de droite (12) et à la paroi d'extrémité de gauche (13) de l'armoire, lesdites deux parois d'extrémité étant opposées l'une à l'autre par rapport à l'axe de direction longitudinale (X) du coffre, pour chaque paroi d'extrémité (12, 13) ledit moyen d'interconnexion comprenant au moins un axe creux (21) qui est en saillie sur la paroi d'extrémité correspondante et est composé d'une première (21a) et d'une seconde (21b) languettes longitudinales qui sont séparées l'une de l'autre par deux fentes traversantes opposées (22, 22) et délimitent l'espace creux intérieur (23) de l'axe creux, la première languette (21a) ayant une section transversale plus petite que celle de la seconde languette (21b), ledit moyen d'interconnexion comprenant une cavité (24) qui est pratiquée sur la paroi d'extrémité à proximité de et hors de chaque axe creux (21) et s'étend autour de la première languette (21a) de l'axe creux, l'axe creux de la paroi d'extrémité de droite d'une unité modulaire étant destiné à venir en prise avec l'axe creux de la paroi d'extrémité de gauche d'une unité modulaire adjacente et vice versa afin d'aligner et de raccorder les deux unités modulaires pendant les opérations de montage de l'armoire, par rapport à un axe d'alignement commun (Y) et à un plan de référence (p) passant par les fentes (22), l'axe creux (21) et la cavité relative (24) pratiquée sur la paroi d'extrémité de gauche (13) d'un coffre étant orientés tournés vers le bas et étant décalés par rapport à l'axe creux (21) et à la cavité relative (24) pratiquée sur la paroi d'extrémité de droite (12), de sorte que la première languette (21a) d'un axe peut pénétrer dans l'espace creux (23) d'un autre axe et la seconde languette (21b) d'un axe peut pénétrer dans la cavité (24) pratiquée à proximité de et hors de l'autre axe, permettant l'interconnexion mutuelle entre deux axes creux opposés.

2. Armoire selon la revendication 1, dans laquelle au moins la première languette (21a) de chaque axe (21) possède une extrémité libre chanfreinée (26) destinée à venir en prise avec la seconde languette (21b) d'un axe opposé, l'extrémité libre chanfreinée étant façonnée de manière à faciliter et à guider l'alignement et l'interconnexion entre les deux axes.

3. Armoire selon la revendication 1 ou 2, dans laquelle la première languette (21a) de chaque axe (21), qui est destinée à pénétrer dans l'espace creux intérieur (23) d'un autre axe, est pourvue intérieurement d'une ou plusieurs nervures de renforcement (25).

4. Armoire selon une ou plusieurs des revendications 1 à 3, dans laquelle la cavité (24), qui se situe sur la paroi d'extrémité à proximité de et hors de chaque axe creux (21) et s'étend autour de la première languette (21a), a une extension parallèle à l'axe d'alignement (Y) non inférieure à l'extension de la seconde languette (21b) par rapport à la paroi d'extrémité.

5. Armoire selon une ou plusieurs des revendications 1 à 4, dans laquelle l'espace creux intérieur (23) de chaque axe a une extension parallèle à l'axe d'alignement (Y) non inférieure à l'extension de la première languette (21b).

6. Armoire selon une ou plusieurs des revendications précédentes, dans laquelle chaque paroi d'extrémité (12, 13) du coffre (11) est pourvue d'une partie verticale (30) en saillie sur le sommet du coffre (11) vers le haut à proximité de l'arrière de l'armoire, ladite partie verticale (30) interconnectant le coffre (11) et la partie arrière (70) de l'unité modulaire.

7. Armoire selon une ou plusieurs des revendications précédentes, dans laquelle chaque paroi d'extrémité (12, 13) du coffre (11) est pourvue d'une ou plusieurs fentes ouvertes (40) qui sont pratiquées sur le bord supérieur de la paroi d'extrémité et servent de sièges pour loger des connecteurs de câbles électriques destinés à être placés à travers deux unités modulaires adjacentes, les fentes étant positionnées de façon à être alignées avec les fentes correspondantes d'une unité modulaire adjacente quand les deux unités modulaires sont alignées.

8. Armoire selon une ou plusieurs des revendications précédentes, dans laquelle chaque coffre possède un canal d'évacuation (50) qui s'étend entre les deux parois d'extrémité opposées (12, 13) du coffre, les deux parois d'extrémité opposées (12, 13) étant pourvues d'une ouverture traversante (51) qui est pratiquée sur la paroi d'extrémité en vis-à-vis du canal d'évacuation, les canaux d'évacuation (50) des deux unités modulaires adjacentes (10) étant connectées de manière hydraulique l'une à l'autre par un raccord de tuyauterie (52) inséré dans les ouvertures traversantes (51) quand les deux unités modulaires adjacentes sont alignées et raccordées l'une à l'autre.

9. Armoire selon la revendication 8, dans laquelle l'armoire comprend au moins un raccord de tuyauterie d'extrémité (53) qui raccorde le canal d'évacuation (50) d'une unité modulaire d'extrémité d'une armoire à une ouverture traversante (51) à un conduit d'évacuation externe (54).

10. Armoire selon la revendication 9, dans laquelle ledit raccord de tuyauterie d'extrémité (53) a une forme de T et est positionné entre deux armoires adjacentes (1) afin de connecter de manière hydraulique les canaux d'évacuation (50) des deux armoires adjacentes au même conduit d'évacuation externe (54).

11. Armoire selon une ou plusieurs des revendications précédentes, dans laquelle le coffre (11) de chaque unité modulaire (10) est pourvu d'un ou plusieurs pieds de support réglables (60) qui sont positionnés sous le coffre à chaque paroi d'extrémité (12, 13), chaque pied de support (60) ayant une partie de raccord filetée (61) par laquelle le pied (60) est inséré de manière réglable dans un siège fileté (62) pratiqué à l'intérieur de la paroi d'extrémité.

12. Armoire selon la revendication 11, dans laquelle le siège fileté (62) est défini par des parties filetées en demi-anneau (63) qui sont positionnées de façon alternée l'une avec l'autre sur deux faces opposées du siège fileté (62) par rapport à l'axe de réglage (Z) du pied (60).

13. Armoire selon la revendication 11 ou 12, dans laquelle la partie de raccord filetée (61) du pied et le siège fileté (62) ont des filets correspondants qui ont un profil asymétrique par rapport aux plans (m) orthogonaux par rapport à l'axe de réglage (Z) du pied (60).

14. Armoire selon une ou plusieurs des revendications 11 à 13, dans laquelle chaque siège fileté (61) est accessible depuis le sommet du coffre afin de régler le pied réglable (60) depuis le sommet.

15. Armoire selon une ou plusieurs des revendications précédentes, dans laquelle chaque paroi d'extrémité (12, 13) du coffre d'une unité modulaire est fabriquée comme un élément distinct du corps principal du coffre (11).
